# EUROPEAN PATENT APPLICATION

(11) **EP 3 750 788 A1**
(43) Date of publication of application: **16.12.2020**
(21) Application number: 19179655.6
(22) Date of filing: 12.06.2019
(51) Int. Cl.: B62K 19/30, B62M 6/55

(54) **A DRIVE UNIT OF AN ELECTRIC BICYCLE**

(71) Applicant: Agentura REPRO spol. s r.o., 561 51 Letohrad (CZ)
(72) Inventor: Mráz, Richard, 56165 Jamné nad Orlicí (CZ)
(74) Representative: Sedlák, Jirí

(57) **Abstract**

The drive unit (3) of the electric bicycle improving the rider's comfort consists of the electric motor (30), gearbox (27) coupled with the electric motor (30), of the driven bevel gear (18) coupled with the gearbox (27), and of the chainwheel carrier (10) of the chainwheel (6) coupled with the driven bevel gear (18), where the drive unit (3) comprises at least one single-direction bearing (20) for the transmission of the electric motor (30) torque and at least one single-direction bearing (21) for the transmission of the rider's torque. The essence of the invention rests in the fact that the single-direction bearing (20) for the transmission of the electric motor (30) torque is kinematically arranged between the driven bevel gear (18) and the chainwheel carrier (10) of the chainwheel (6), which means that this position of the single-direction bearing (20) prevents the chainwheel carrier (10) from giving a spin to the decoupled electric motor (30) and the gear assemblies coupled therewith, which would otherwise result in the loss of mechanical energy of the pedalling rider.

## Description

### Field of the Invention

The invention concerns an electric bicycle drive unit that helps the rider when riding on the electric bicycle by a contribution of the electric motor torque giving a spin to a transducer that is otherwise given a spin by the rider's pedalling torque.

### Background of the Invention

The currently known electric bicycles have an electric motor, which helps give a spin to the rear wheel by its torque, integrated in their rear wheel hub. Other known electric bicycles have their electric motor integrated in the electric bicycle frame, from which the torque is utilized for giving a spin to a transducer that is normally given a spin by the rider's pedalling torque. From the spinning transducer, the torque is transmitted to the rear wheel of the electric bicycle via a chain.

An example of the electric bicycle equipped with an electric motor in the bicycle frame is a solution disclosed in the document US 2019/0039677 A1. The invention presents an electric motor that is integrated in the tubes of the electric bicycle frame where its torque output is coupled with the transducer carrier via a gear set forming a gearbox. The disadvantages of the invention rest in the fact that in the periods when the electric motor does not contribute to the rider's riding, some energy is lost as the rider needs to rotate by his/her pedalling not only the transducer but also the gear set of the gearbox. Only the electric motor is decoupled via a single-direction bearing to prevent undesirable rotation and loss of the rider's energy. Such a solution diminishes the rider's comfort on the electric bicycle and moreover, the gear set is stressed in the opposite direction. Among other disadvantages of the invention is the fact that the structure that includes a single-direction bearing is bulky and protrudes towards the cranks of the pedals, which limits the utilization of a number of the known and series-produced transducers, because of the fact that the conditions of a suitable chain line are not met. The chain line refers to the distance from the longitudinal axis of the electric bicycle frame to the front chainwheel axis in the case of a single chainwheel, or to the axis of the centre between both transducers in the case of a double chainwheel. Moreover, the design of the cranks with pedals results in a wide block of the drive unit, which fails to fulfil the ergonomic condition for the spacing of pedals required for healthily burdened joints of lower extremities, a so-called "Q Factor".

The task of the invention is to design a drive unit installed in the electric bicycle frame, the purpose of which is to increase the rider's comfort by having a single-direction bearing applied as close as possible to the central axis of pedalling in terms of the direction of torque transmission from the electric motor to the chainwheel , to decouple the gearbox and electric motor from the pedalling rider's torque, and the follow-up reduction in the loss of the rider's energy otherwise resulting from useless rotating the gear sets in the gearbox, the design of which would meet requirements imposed on a desirable chain line and a desirable Q Factor.

### Summary of the Invention

The set goal is attained by an electric bicycle drive unit designed according to the following invention.

The electric bicycle drive unit improving the rider's comfort comprises an electric motor serving as an auxiliary source of torque. Another integral part of the drive unit is a gearbox coupled with the electric motor. The gearbox converts high revolutions of the electric motor into lower ones with a greater torque. The drive unit also includes a driven bevel gear that is coupled with the gearbox. The driven bevel gear has two functions. The first one is to transmit rotatory motion from one axis of rotation to another that is perpendicular, and the second function is further reduction in revolutions transmitting the torque generated by the electric motor to the chainwheel carrier. The transducer carrier is the last component of the drive unit and as stated above, it is coupled with the driven bevel gear. In addition, the drive unit includes at least one single-direction bearing for electric motor torque transmission that enables the transmission of torque from the electric motor towards the chainwheel carrier. On the other hand, it decouples the electric motor to prevent the rider's torque from being transmitted to the electric motor. The last component of the drive unit is at least one single-direction bearing for the transmission of the rider's torque that transmits the rider's torque from the central axis of pedalling to the chainwheel carrier. On the other hand, it decouples the pedalling central axis from the transducer carrier to prevent the electric motor torque from being transmitted to the pedalling axis from the chainwheel carrier.

The summary of the invention is based on the fact that the single-direction bearing transmitting the electric motor torque is kinematically arranged between the driven bevel gear and chainwheel carrier.

This is advantageous due to the fact that the rider's torque is decoupled prior to transmission from the chainwheel carrier to the gears converting rotatory motion between the carrier and the electric motor. These components of the drive unit are immobilized when only the rider's torque is employed so that no loss of energy spent by the rider occurs, which has a positive impact on comfort related to ride on an electric bicycle. In addition, the fact that the aforementioned components of the drive unit are immobilized means that they are not stressed due to the kinematically reversed motion, and therefore the risk of their damage diminishes.

In a preferred embodiment of the drive unit according to the invention, the outer perimeter of the single-direction bearing is pressed onto the driven bevel gear while the inner perimeter is pressed onto the chainwheel carrier. Coupling the perimeters of the single-direction bearing by pressing is easy in terms of design and yet mechanically resistant and space-efficient.

A preferred embodiment according to the invention refers to the embodiment where the gearbox is a planetary gearbox, namely without a single-direction bearing. Deployment of a planetary gearbox without a single-direction bearing eliminates the requirement for space occupied by the drive unit, in particular by the motor block with the gearbox. The positive impact of the aforementioned design is lesser space necessary for integration into the electric bicycle frame. In addition, the narrow motor block, the width of which does not exceed 68 mm, allows all known chainwheels to be utilized, while respecting their requirements for adhering to the prescribed chain line value ensuring the correct function of the entire transmission mechanism consisting of the set of transducers, lever key, chain, pinions on the rear wheel hub and derailleur. The currently known drive units do not allow all known transducers to be employed as they do not make it possible to attain the required chain line determined by the manufacturer of transducers and other gear-shift components, namely due to the motor block with gearbox that is wider.

Moreover, by reducing the size of the motor block and gearbox of the drive unit, the central pedalling axis giving a spin to the transducer that gears with it via own single-direction bearings could be reduced up to the maximum length of 136 mm, which allows the required ergonomic distance of pedals, the so-called Q Factor, to be achieved.

The last but not least advantage of the invention of the drive unit with a reduced width of the motor block and gearbox is the fact that it can be integrated into the electric bicycle frame more easily, which considerably improves the aesthetic design of the electric bicycle.

Among the main advantages of the invention is saving energy exerted by the rider that would otherwise be uselessly spent on making the drive unit gears move that also wears the moving parts of the drive unit. Another advantage is the deployment of a single-direction bearing, the perimeters of which are pressed onto their assigned components of the drive unit, which can be easily implemented in terms of production. In addition, this engineering solution is sustainable and space-saving. Among the last advantages of the invention is the deployment of a planetary gearbox and the related reduction in size of the motor block with a positive impact on the fulfilment of conditions prescribed for the chain line and ergonomic requirements for healthy load applied to the rider's lower extremities.

### Explanation of Drawings

The present invention will be explained in detail by means of the following figures where:
- Fig. 1: shows the overall side view of the electric bicycle,
- Fig. 2: shows the overall axonometric view of the electric bicycle,
- Fig. 3: shows the side view of the drive unit,
- Fig. 4: shows the sectional view of the drive unit,
- Fig. 5: shows the drive unit only without the motor holder,
- Fig. 6: shows the right side view of the drive unit,
- Fig. 7: shows the top view of the drive unit,
- Fig. 8: shows the top view of the drive unit without the illustrated blocks of the electric motor and the gearbox,
- Fig. 9: shows the horizontal sectional view of the drive unit without the blocks of the electric motor and the gearbox,
- Fig. 10: shows the horizontal sectional view of the drive unit with the blocks of the electric motor.

### An Example of the Invention Embodiment

It shall be understood that the specific cases of the invention embodiments described and depicted below are provided for illustration only and do not limit the invention to the examples provided here. Persons skilled in the art will find or, based on routine experiments, will be able to provide a greater or lesser number of equivalents to the specific embodiments of the invention which are described here.

The description of the electrical components of the electric bicycle in the undermentioned example of the invention embodiment is illustrative only as the electrical components are not included in the invention and a person skilled in the art of electric bicycles manufacture is able to complete electrical components based on the illustrative description by routine professional work activity to have them compliant with a detailed description applied within the framework of the current state of the art.

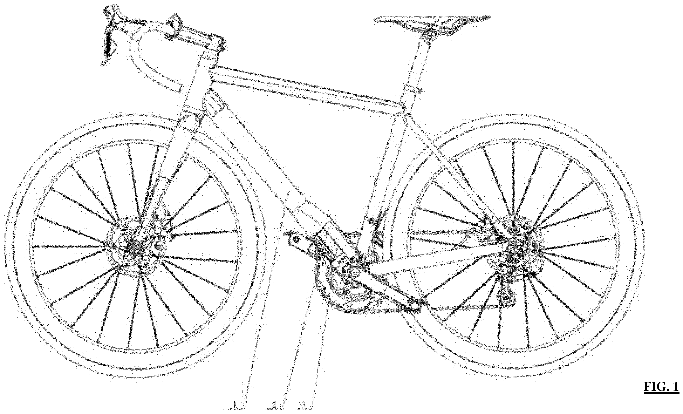

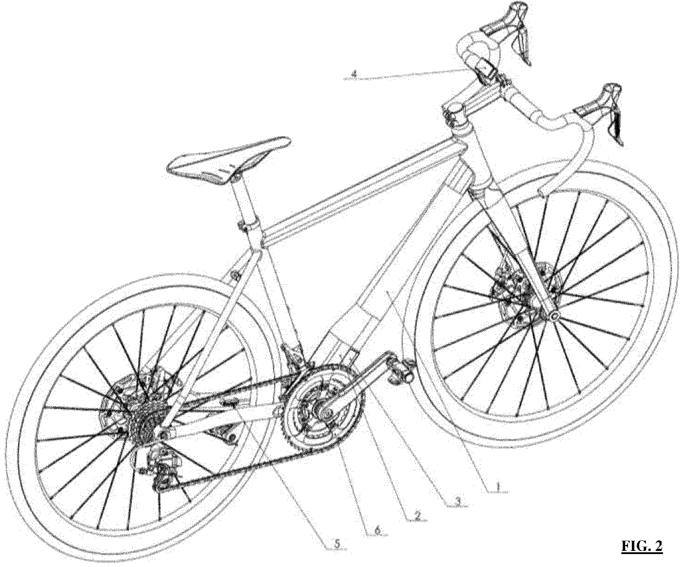

Fig. 1 and Fig. 2 show the electric bicycle with a drive unit **3** integrated in the frame **1,** which is fixed using a holder **2.** In addition, the drive unit controller **4** fixed on the electric bicycle handlebars and also the electric bicycle driving speed sensor **5** can be seen. The last component highlighted in the figures is the transducer **6.**

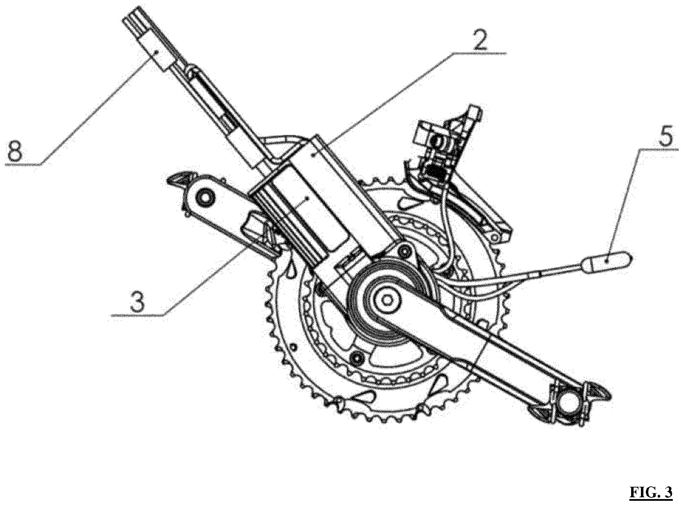

Fig. 3 shows an independent drive unit **3** embedded in the holder **2.** In addition, we can see cables leading from the drive unit **3** towards the connectors **8** and the speed sensor **5.**

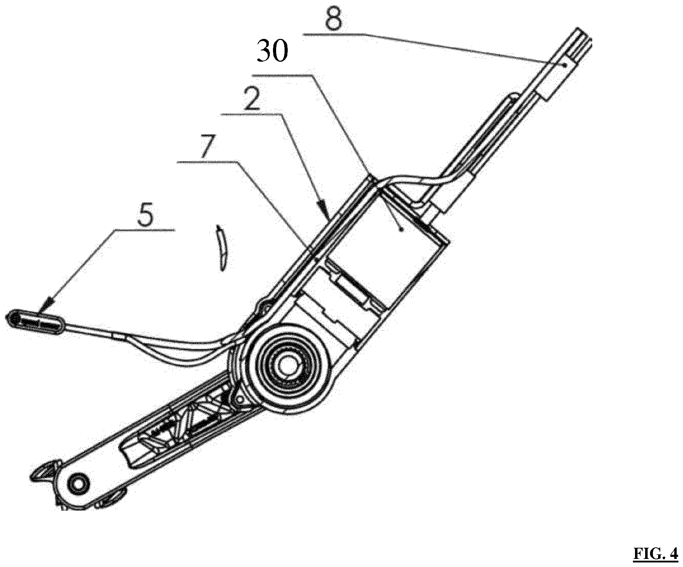

Fig. 4 showing a sectional view of the drive unit **3** also provides a clear view of the electric motor **30,** the block **7** of the electric motor **30** forming a protecting case of the electric motor **30,** the aforementioned connectors **8** and the electric bicycle driving speed sensor **5.**

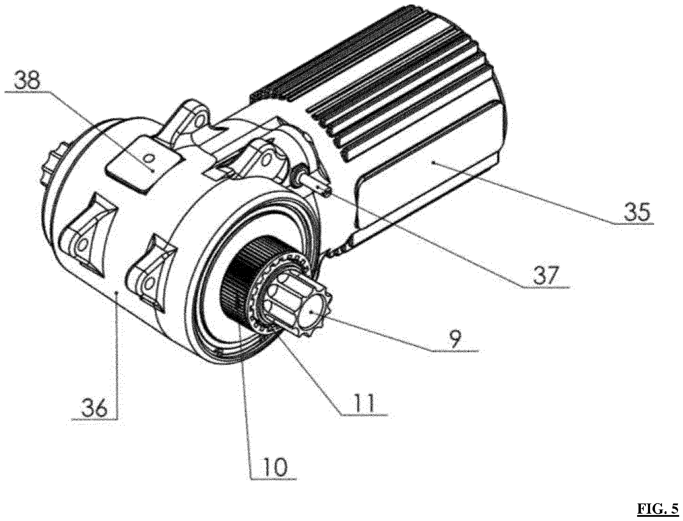

Fig. 5 shows an independent drive unit **3.** The first thing that can be seen is the visible block **35** of the electric motor **30** made of aluminium and also the block **36** of the central axis **9** made of aluminium as well. The block **36** of the central axis **9** includes a rubber grommet **38** for cabling. The central axis **9** for the cranks with pedals is secured by the locking nut **11** of the transducer **6** (that is not illustrated). In addition, we can see the end of the carrier **10** of the transducer **6** (that is not illustrated). The last element shown in the figure is the pin **37** protecting the case of the drive unit **3** from damage caused by a dropped chain. The maximum width of the block **35** of the electric motor **30** is up to 68 mm, incl. allowing the requirement for a short chain line to be met.

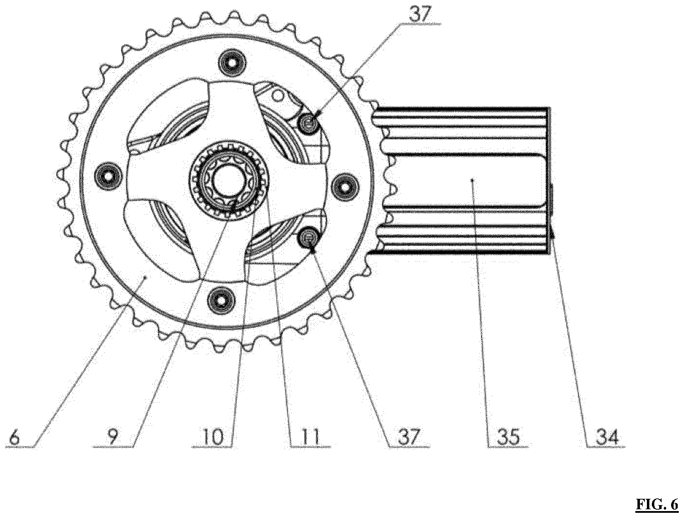

Fig. 6 shows the right side view of the drive unit **3** with the transducer **6** mounted on the carrier **10** and locked by the nut **11.** The carrier **10** is put on the central axis **9** of pedalling. In addition, we can see the protective pins **37,** the block **35** of the electric motor **30,** and the protective cover **34** of the control unit of the drive unit **3.**

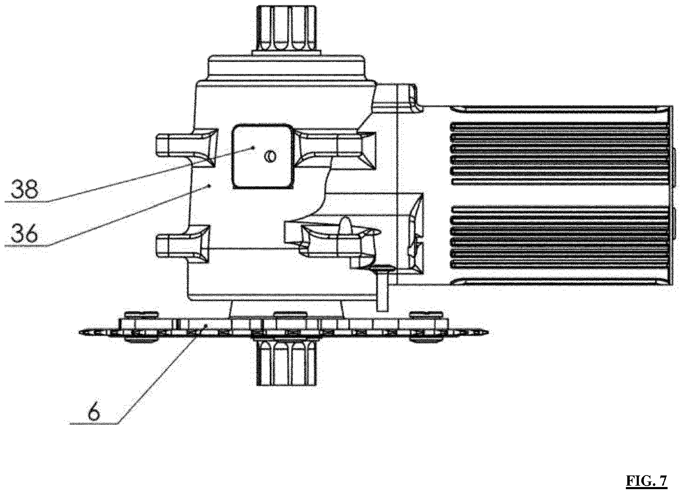

To provide a complete view, Fig. 7 shows a top view of the drive unit **3.** In the top view, the transducer **6,** rubber grommet **38,** and the block **36** of the central axis **9** are clearly visible.

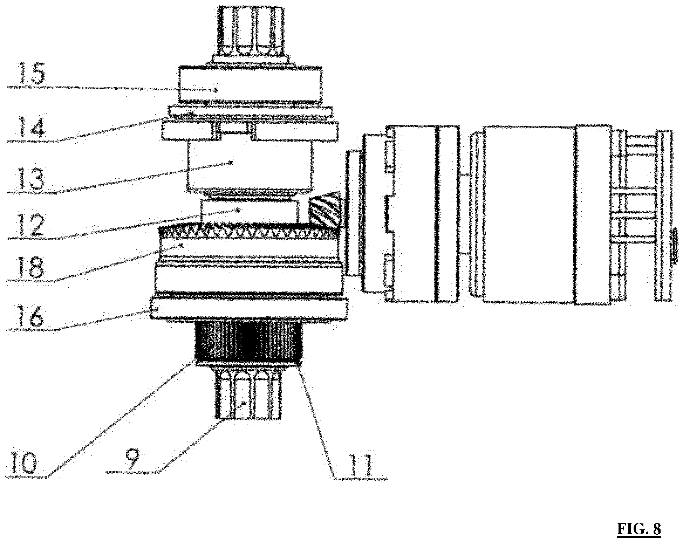

Fig. 8 shows the top view of the drive unit **3** without the aluminium protective blocks **35** and **36.** The central axis **9** comprises a put-on carrier **10,** including the locking nut **11.** In addition, the central axis **9** includes the centring ring **12,** the sensor **13** of the rider's pedalling torque, the pedalling speed sensor **14,** the left bearing **15** of the central axis **9,** the bearing **16** of the carrier **10,** and the driven bevel gear **18.**

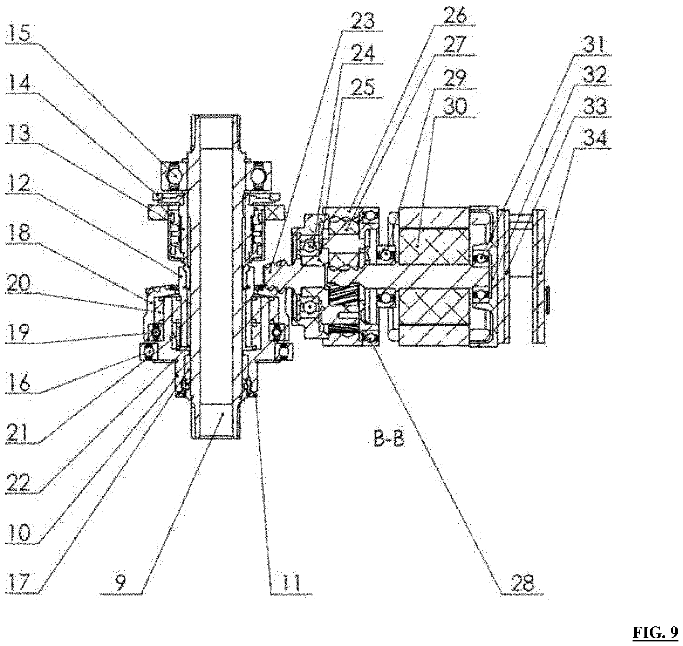

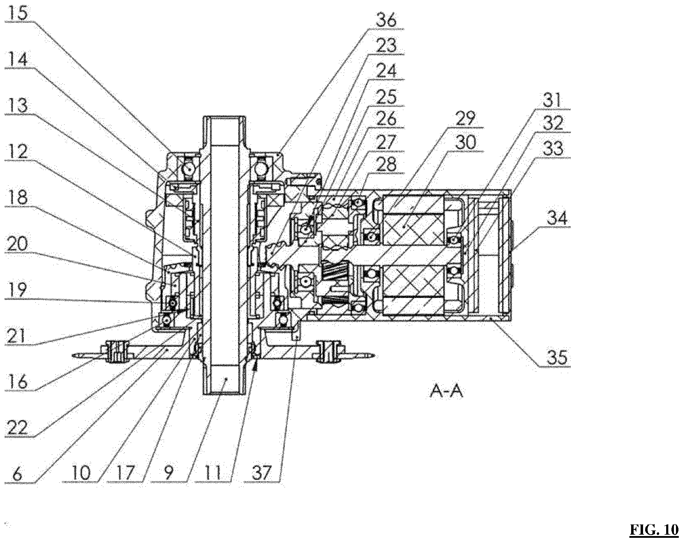

Fig. 9 shows a sectional view of the drive unit **3** without the transducer **6,** without the block **35** of the electric motor **30** and without the block **36** of the central axis **9.** Fig. 10 shows the missing components mentioned above.

The central axis **9** comprises the put-on carrier **10** of the transducer **6,** centring ring **12,** the sensor **13** of the rider's pedalling torque, pedalling speed sensor **14,** the left bearing **15** of the central axis **9,** the bearing **16** of the carrier **10,** and also the bronze case **17** between the central axis **9** and the carrier **10.** Among other items put on the central axis **9,** or where applicable on the carrier **10** is the driven bevel gear **18** with the bearing **19** located between the wheel **18** and the carrier **10.** In addition, between the carrier **10** and the driven gear **18,** the single-direction bearing **20** for the transmission of the electric motor **30** torque is situated. Among the last components put on the carrier **10** are a couple of the single-direction bearings **21** and the sliding sleeve **22** for centring the centring ring **12** on the central axis **9.**

The outer perimeter of the single-direction bearing **20** is pressed onto the driven bevel gear **18** and the inner perimeter of the single-direction bearing **20** is pressed onto the carrier **10** of the transducer **6.** The outer perimeters of the two single-direction bearings **21** are pressed onto the carrier **10,** while their inner perimeters are pressed on the central axis **9.** Each of the two single-direction bearings **21** has the strength of approximately 140 Nm, meaning 280 Nm altogether, which is a sufficient limit for the elimination of slipping in case of vigorous pedalling.

The driven bevel gear **18** is driven by the driving pinion **23,** which is the action output of the planetary gearbox **27.** The gearbox comprises the cage **25** of the planetary gears, and the back bearing **24** of the cage **25** of the planetary gears, and the gearbox **27** comprising the ring gear **26** and the front bearing **28** of the cage **25** of the planetary gears.

On its shaft driving the ring gear **26,** the electric motor **30** is fitted with the back bearing **29** of the electric motor **30** shaft and also with the front bearing **31.**

The drive unit **3** is equipped with the control unit **33,** which is separated from the electric motor by the barrier **32** and is covered by the cover **34**.

The short central axis **9** of the length of up to 136 mm allows the required mutual distance of the pedals (called Q Factor in foreign references) to be achieved, which is a benefit compared to the generally known drive units providing such mutual distances of pedals in values exceeding those normally required from the point of view of the pedalling rider's ergonomics (i.e. resulting in damage to the rider's health), namely due to load applied to the rider's joints, tendons, and muscles. The aforementioned example of the invention embodiment offers the Q Factor of 160 mm, while the other generally known drive units offer Q Factor ranging from 175 mm to 190 mm.

### Description of the key functions:

When the speed sensor **14** of the central axis **9** of pedalling sends a signal that the rider started pedalling to the control unit **33,** the electric motor **30** is activated. The power output of the electric motor **30** is then controlled by the control unit **33** according to information provided by the sensor **13** of the rider's pedalling torque working on the following principle: the drive unit **3** provides support corresponding to the current value of torque detected based on the rider's pedalling.

In addition, the control unit **33** processes information from the sensor **5** of the electric bicycle driving speed, namely for the purpose of the drive unit **3** behaviour control depending on the current driving conditions of the electric bicycle (during accelerating, during providing support to the drive unit, when the driving speed limit is attained, when the speed limit is exceeded, etc.). In addition, based on information from the controller **4** of the drive unit **3,** from the temperature sensor in the block **35** of the motor **30,** etc.

The single-direction bearing **20** for the transmission of the electric motor **30** torque: during its action, it ensures the transmission of the electric motor **30** torque via the driven bevel gear **18** to the carrier **10** of the transducer **6** and then onto the transducer **6.** This single-direction bearing **20** is out of contact at the moment when the drive unit **3** is decoupled and the rider continues pedalling, for example due to exceeding the maximum allowed speed or in the case of battery run out.

The single-direction bearing **21** (an assembly of two units beside one another) for the transmission of the rider's torque: this single-direction bearing **21** is in gear when the speed of the carrier **10** of the transducer **6** driven by the electric motor **30** via the driven bevel gear **18** is lower than the speed of the central axis **9** driven by the rider. With a lower speed of the central axis **9** driven by the rider, lower than the speed of the carrier **10** of the transducer **6** driven by the electric motor **30** via the driven bevel gear **18,** this bearing **21** is out of contact (at idle thrust).

### Industrial Applicability

The drive unit of the electric bicycle according to the invention can be utilized in the production of electric bicycles.

### Overview of the Positions

- 1: electric bicycle frame
- 2: drive unit holder
- 3: drive unit in the central frame assembly and in the longitudinal axis of the lower frame tube
- 4: drive unit controller
- 5: electric bicycle driving speed sensor
- 6: chainwheel
- 7: motor block
- 8: connectors
- 9: central axis for the cranks with pedals
- 10: chainwheel carrier
- 11: chainwheel locking nut
- 12: centring ring
- 13: rider's pedalling torque sensor
- 14: pedalling central axis speed sensor
- 15: central axis left bearing
- 16: carrier bearing
- 17: bronze casing between the central axis and the transducer carrier
- 18: driven bevel gear
- 19: bearing between the bevel gear and the transducer carrier
- 20: single-direction bearing for electric motor torque transmission
- 21: single-direction bearing (an assembly of two units beside one another) for the transmission of the rider's torque
- 22: sliding sleeve for centring the centring ring on the central axis
- 23: driving pinion
- 24: back bearing of the planetary gears cage in the planetary transmission
- 25: planetary gears cage in the planetary transmission with the pressed-on bevel gear
- 26: ring gear in the planetary transmission
- 27: planetary gearbox
- 28: front bearing of the planetary gears cage in the planetary transmission
- 29: back bearing of the electric motor shaft
- 30: electric motor
- 31: front bearing of the electric motor shaft
- 32: barrier between the electric motor and the space for the drive unit control unit
- 33: drive unit control unit
- 34: cover of the drive unit control unit
- 35: aluminium motor block
- 36: aluminium central axis block
- 37: pin preventing damage to the gearbox block in case of a dropped chain
- 38: rubber grommet for cable outlet

## Claims

1. A drive unit (3) of an electric bicycle improving a rider's comfort consisting of an electric motor (30), a gearbox (27) coupled with the electric motor (30), of a driven bevel gear (18) coupled with the gearbox (27), and of a chainwheel carrier (10) of a chainwheel (6) coupled with the driven bevel gear (18), where the drive unit (3) comprises at least one single-direction bearing (20) for the transmission of the electric motor (30) torque and at least one single-direction bearing (21) for the transmission of the rider's torque, **characterized in that** the single-direction bearing (20) for the transmission of the electric motor (30) torque is kinematically arranged between the driven bevel gear (18) and the chainwheel carrier (10) of the chainwheel (6).

2. The drive unit according to claim 1, **characterized in that** the outer perimeter of the single-direction bearing (20) is pressed onto the driven bevel gear (18) and the inner perimeter of the single-direction bearing (20) is pressed onto the chainwheel carrier (10) of the chainwheel (6).

3. The drive unit according to claim 1 or 2, **characterized in that** the gearbox (27) is a planetary gearbox.

4. The drive unit according to any of claims 1 through 3, **characterized in that** the electric motor (30) is integrated in a block (35) with the width not exceeding 68 mm.

5. The drive unit according to any of claims 1 through 4, **characterized in that** the chainwheel (6) is in gear with a central axis (9), the length of which does not exceed 136 mm.
